# EUROPÄISCHE PATENTSCHRIFT

(11) **EP 1 055 555 B1**
(45) Veröffentlichungstag und Bekanntmachung des Hinweises auf die Patenterteilung: **10.11.2004**
(21) Anmeldenummer: 00110600.4
(22) Anmeldetag: 18.05.2000
(51) Int. Cl.: B60P 3/22

(54) **Silobehälter**
Silo
Silo

(30) Priorität: 26.05.1999 DE 29909012 U
(43) Veröffentlichungstag der Anmeldung: 29.11.2000
(73) Patentinhaber: Feldbinder & Beckmann GmbH & Co. KG, 21423 Winsen/Luhe (DE)
(72) Erfinder: Beckmann, Jan-Dirk, 21423 Winsen/Luhe (DE); Feldbinder, Otto, 29643 Neuenkirchen (DE)
(74) Vertreter: Richter, Werdermann, Gerbaulet & Hofmann

(56) Entgegenhaltungen:
- WO-A-89/07568
- DE-A- 19 757 537
- DE-U- 29 815 293
- GB-A- 1 502 870
- US-A- 2 976 950
- US-A- 5 428 963

## Beschreibung

Die Erfindung betrifft einen Silobehälter mit einem Innenraum für schüttfähige, insbesondere pulverförmige, Güter, gemäß dem Oberbegriff des Anspruchs 1.

Bei einer Beladung und Entladung von Silobehältern kommt es bei der Beladung mit pulverförmigen bzw. schüttfähigen Gütern, wie beispielsweise Mehl, zu extremer Feuchtigkeitsbildung an den Behälterwandungen und an dem Behälterhimmel des Silobehälters, da das pulverförmige Gut bei der Verladung häufig eine höhere Temperatur aufweist als die Luft im Innenraum des Silobehälters bzw. als die Wandungen des Silo behälters. Die mit dem pulverförmigen Gut mitgeführte warme Luft hat ein gewisses Speichervermögen für Feuchtigkeit, wie beispielsweise Wasser, in Form von Luftfeuchtigkeit. Bei Kontakt mit der kühleren Wandung des Silobehälters kühlt jedoch diese Luft ab und das entsprechende Speichervermögen für Feuchtigkeit sinkt. Die Luft ist dann mit Feuchtigkeit übersättigt, wodurch diese überschüssige Feuchtigkeit an der Wandung des Silobehälters, vorzugsweise am Behälterhimmel, als Feuchtigkeitströpfchen kondensiert. Diese Feuchtigkeitsbildung wird häufig noch zusätzlich dadurch begünstigt, dass eine schnelle Entspannung des zum Entladen zuvor unter Überdruck gesetzten Behälters nach einem Entladevorgang erfolgt.

Diese Feuchtigkeit setzt sich häufig am Behälterhimmel in einem Winkel von +/-30 Grad vom höchsten Punkt des Behälters ausgehend an der Wandung ab. Wenn ein derartiger mit Feuchtigkeit am Behälterhimmel versehener Silobehälter wieder mit einem pulverförmigen Gut beladen wird, so haftet ein Teil dieses pulverförmigen Gutes in den feuchten Bereichen des Behälterhimmels an. Ferner schlägt sich die durch Abkühlung überschüssige Feuchtigkeit nach Beendigung der Beladung auf dem pulverförmigen Gut nieder und bildet eine teilweise klebende Oberfläche. Diese legt sich beim Entladevorgang auf Konenbleche des Silobehälters, wodurch eine gewünschte saubere und vollständige Entleerung des Silobehälters nicht möglich ist. Um Verunreinigungen von nachfolgenden, in den Silobehälter zu füllenden, pulverförmigen bzw. schüttfähigen Gütern zu vermeiden, müssen daher diese Anhaftungen durch aufwendige Reinigungs- und anschließende Trocknungsarbeiten entfernt werden.

Ein Silobehälter gemäss den Merkmalen des Oberbegriffes des unabhängigen Anspruches 1 ist bekannt aus DE-U-29815293.

Es ist Aufgabe der vorliegenden Erfindung, einen Silobehälter der obengenannten Art zur Verfügung zu stellen, welcher die obengenannten Nachteile beseitigt und eine Feuchtigkeitsbildung im Innenraum des Silobehälters weitgehend eindämmt.

Diese Aufgabe wird durch einen Silobehälter der o.g. Art mit den in Anspruch 1 gekennzeichneten Merkmalen gelöst.

Dazu ist es erfindungsgemäß vorgesehen, dass am Silobehälter (100) ein zusätzlicher, Luftzirkulationskreislauf vorgesehen ist, welcher Luft ansaugt, entwässert und die entwässerte Luft dem Silobehälter (100) zuführt.

Dies hat den Vorteil, dass eine wirksame Anlage zum Reduzieren einer Luftfeuchtigkeit im Silobehälter bzw. eine Anlage zum Trocken von Luft im Silobehälter zur Verfügung steht.

Vorzugsweise Weitergestaltungen der Vorrichtung sind in den Ansprüchen 2 bis 18 beschrieben.

Zweckmäßigerweise ist der Luftzirkulationskreislauf abgeschlossen ausgebildet, wobei der Luftzirkulationskreislauf die angesaugte Luft dem Innenraum des Silobehälters entnimmt.

In einer bevorzugten Ausführungsform weist der Luftzirkulationskreislauf in Luftförderrichtung ausgehend von dem Innenraum folgendes auf: eine Ansaugleitung, einen Anlagenkompressor, eine Lufttrockner-/Luftkühlereinheit mit einer automatischen Entwässerung sowie eine Luftrückführleitung zum Innenraum des Silobehälters. Die Luftrückführleitung ist dabei an einen Oberluftanschluss des Behälters angeschlossen und weist zusätzlich einen Druckminderer mit Rückschlagventil auf. In der Ansaugleitung ist zum Schutz des Kompressors vor schädlichen Teilchen ein Ansaugfilter angeordnet.

Zum Sperren des Luftzirkulationskreislaufes gegen einen Überdruck im Innenraum, wenn sich der Silobehälter im Silobetrieb befindet, ist in Luftförderrichtung nach dem Druckminderer mit Rückschlagventil ein drittes Magnetventil angeordnet.

Zum Sperren des Luftzirkulationskreislaufes gegen einen Überdruck im Innenraum, wenn sich der Silobehälter im Silobetrieb befindet, ist in Luftförderrichtung vor dem Anlagenkompressor ein erstes Magnetventil angeordnet.

Ein leichteres Anlaufen des Anlagenkompressors wird dadurch erzielt, dass in Luftförderrichtung nach dem Anlagenkompressor ein zweites Magnetventil angeordnet ist, wobei zweckmäßigerweise dieses zweite Magnetventil nach Aktivierung des Kompressors mit einer Zeitverzögerung von beispielsweise 2 Sekunden geöffnet wird. Während dieser Zeit lässt das zweite Magnetventil eine Kompressorluft frei ab.

Zum Zwischenspeichern von durch den Anlagenkompressor komprimierten Luft weist letzterer einen Luftbehälter auf. Diese Speicherung sorgt für einen Schaltintervall und damit für entsprechende "Ruhepausen" des Anlagenkompressors während des Betriebs des Luftzirkulationskreislaufes.

Zum Einsatz zusammen mit einem 24V Bordnetz, beispielsweise eines Lastkraftwagens, ist der Anlagenkompressor derart ausgebildet, dass er an einer 24V Stromversorgung betreibbar ist. Mit einem ggf. vorgeschalteten Transformator ist der Kompressor auch mit einem externen 230V-Anschluss betreibbar.

In einer alternativen bevorzugten Ausführungsform des erfindungsgemäßen Silobehälters ist der Luftzirkulationskreislauf ansaugseitig derart offen ausgebildet, dass der Luftzirkulationskreislauf die angesaugte Luft der Umgebung entnimmt, wobei der Luftzirkulationskreislauf in Luftförderrichtung ausgehend von der Ansaugseite für Umgebungsluft folgendes aufweist: eine offene Ansaugleitung, eine Lufttrockner-/Luftkühlereinheit mit einer automatischen Entwässerung sowie eine Luftrückführleitung mit Absperrventil zum Innenraum des Silobehälters. Am Silobehälter ist ferner eine offene Abluftleitung mit Absperrventil vorgesehen ist.

Beispielsweise ist der Silobehälter auf einem Fahrzeug, insbesondere einem Sattelanhänger, angeordnet.

Zweckmäßigerweise ist ein Dorndeckel mit einem zusätzlichen Schlauchleitungsanschluss zur Entnahme von Luft aus dem Innenraum vorgesehen.

Nachstehend wird die Erfindung anhand der beigefügten Zeichnungen näher erläutert. Diese zeigen in
- Fig. 1: eine schematische Schaltskizze einer ersten bevorzugten Ausführungsform eines erfindungsgemäßen Silobehälters und
- Fig. 2: eine schematische Schaltskizze einer zweiten bevorzugten Ausführungsform eines erfindungsgemäßen Silobehälters.

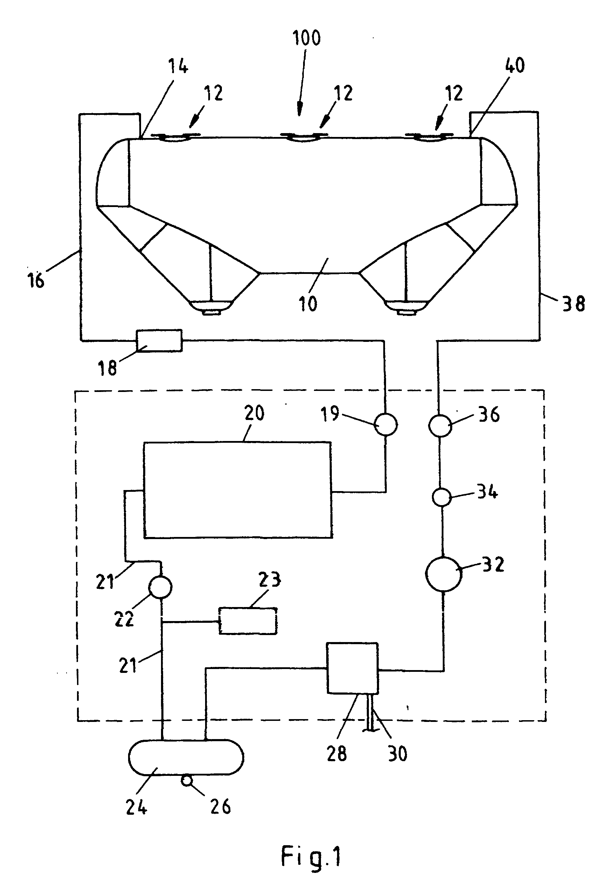

Die in Fig. 1 dargestellte erste bevorzugte Ausführungsform eines erfindungsgemäßen Silobehälters 100 umfasst einen Behälterkörper 10 mit einem nicht näher dargestellten Innenraum. Auf dem Behälter 10 sind Domdeckel 12 zum wahlweise Verschließen des Innenraumes vorgesehen. Der Silobehälter 100 weist zusätzlich einen Schlauchleitungsanschluss 14, an dem eine Ansaugleitung 16 angeordnet ist. Über diese Ansaugleitung 16 ist ein Luftzirkulationskreislauf ausgebildet, welcher in Luftförderrichtung folgendes aufweist, einen Luftfilter 18, ein erstes Magnetventil 19, einen Anlagenkompressor 20 mit einer Verbindungsleistung mit einem zweiten Magnetventil 22 und einem Druckschalter 23 für jeden Kompresser 20 zum Druckluftauffangbehälter 24 mit einer Ablassleitung 26, eine Lufttrockner-/Luftkühlereinheit 28 mit einer automatischen Entwässerung 30, einen Druckminderer 32, ein Rückschlagventil 34, ein drittes Magnetventil 36 sowie eine Luftrückführleitung 38 zum Innenraum des Silobehälters 10, wobei die Luftrückführleitung 38 mit einem Oberluftanschluss 40 des Silobehälters 10 mit dem Innenraum desselben verbunden ist. Die gesamte Lufttrockneranlage ist als aus den Bestandteilen 19 bis 36 bestehenden Teilen gebildete Kompaktanlage 42 ausgebildet.

Über den im Domdeckel 12 angebrachten Anschluss 14 und die Ansaugleitung 18 wird von dem Anlagenkompressor 20 Luft aus dem Innenraum des Silobehälters 10 angesaugt und auf 10 bar (Schaltspanne 8 bis 10 bar) komprimiert. Die komprimierte Luft wird in dem Luftbehälter 22 gespeichert und das durch die Komprimierung ausgeschiedene Wasser mittels einer automatischen Entwässerung ausgeschieden. Diese Speicherung sorgt für ein Schaltintervall und somit für entsprechende "Ruhepausen" des Anlagenkompressors 20. Aus dem Speicher 24 strömt die komprimierte Luft in den kombinierten Lufttrockner-/Luftkühler 28, aus dem die abgeschiedene Feuchtigkeit über ein elektrisches Entwässerungsventil 30 ausgeschieden wird. Die so entfeuchtete Luft strömt durch den nachgeschalteten Druckminderer 32 mit ca. 0,2 bar über das Rückschlagventil 34, das dritte Magnetventil 36, die Luftrückführleitung 38 und den Oberluftanschluss 40 in den Innenraum des Silobehälters 10 zurück.

Eine oberhalb eines in dem Silobehälter 10 angeordneten Ladegutes befindliche Luft ist ein Gemisch aus verschiedenen Gasen. Diese Gase verhalten sich bei einer bestimmten Temperatur und einem bestimmt Druck als "ideale Gase". Diese Luft enthält als weiteren Bestandteil Wasserdampf. Luft kann abhängig von Temperatur und Druck nur eine bestimmte Wassermenge aufnehmen. Die maximal aufnehmbare Wassermenge bezeichnet man als Sättigungsfeuchte. Luft kann bei hohen Temperaturen mehr Wasser aufnehmen als bei niedrigen Temperaturen. Ferner kann Luft bei hohem Druck weniger Wassermenge aufnehmen als bei niedrigem Druck. Neben der Sättigungsfeuchte betrachtet man auch das dimensionslose Mischungsverhältnis "Feuchtegehalt". Der Feuchtegehalt der Luft gibt das Verhältnis der Masse des in der Luft vorhandenen Wassers zu der trockenen Luft an und ist ebenfalls von Temperatur und Luft abhängig.

In dem erfindungsgemäß vorgesehenen Luftzirkulationskreislauf wird mit dem Anlagenkompressor 20 die "gesättigte Luft" komprimiert und somit die Feuchtigkeitsaufnahmefähigkeit der Luft stark herabgesetzt bzw. die Luft durch den Druckanstieg entwässert, da eine bzgl. der Sättigungsfeuchte überschüssige Wassermenge auskondensiert, d.h. in den flüssigen Aggregatzustand übergeht und entsprechend abgezogen werden kann. Die den Luftzirkulationskreislauf durchströmende, komprimierte, feuchte Luft wird in einem zweistufigen Wärmetauscher der Lufttrockner-/Luftkühlereinheit 28 abgekühlt und dadurch weiter entwässert. Im nachgeschalteten Druckminderer 34 wird die entwässerte und gekühlte Luft auf ca. 0,2 bar entspannt bzw. expandiert und in den "feuchten" Innenraum des Silobehälters 10 zurückgeführt. Diese zurückgeführte Luft ist nicht mehr feuchtigkeitsgesättigt und kann somit in dem Innenraum des Behälters 10 bzw. oberhalb des Ladegutes vorhandenes Kondenswasser aufnehmen und in der Entwässerung des Luftzirkulationskreislaufes zuführen. Dies wird noch begünstigt durch die mit 0,2 bar in den Innenraum einströmende, rückgeführte "Trockenluft". Auf diese Weise wird nach und nach die Feuchtigkeit im Innenraum des Silobehälters 10 abgeführt und über die Lufttrockner-/Luftkühlereinheit 28 bzw. das automatische Entwässerungsventil 30 entnommen.

Da bei dem Trocknungsvorgang keine externe sondern lediglich die im Luftzirkulationskreislauf geführte Luft Verwendung findet, die wiederum immer weiter abtrocknet, ist ein Taupunkt (Ausscheiden von Feuchtigkeit aufgrund niedriger Temperatur) weniger kritisch und nur bei extrem niedrigen Umgebungstemperaturen zu beachten.

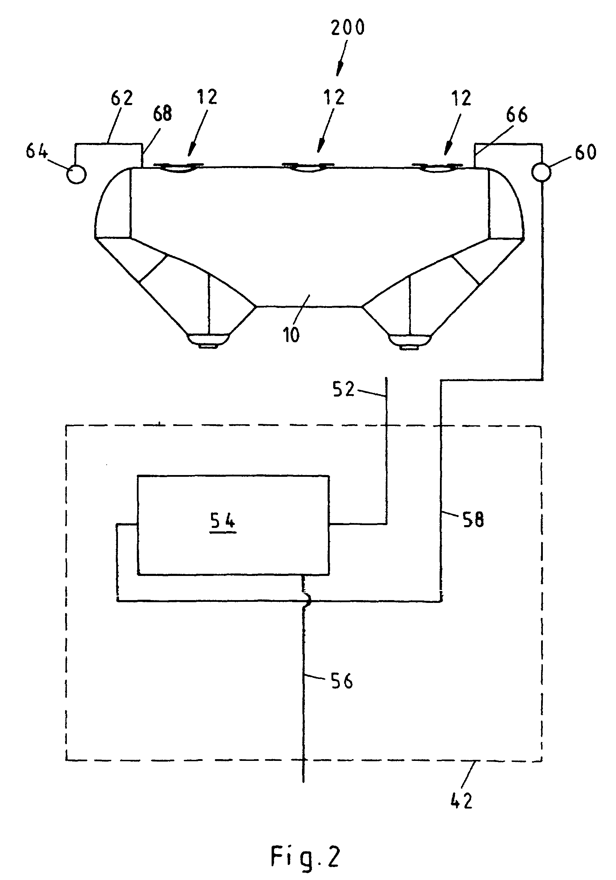

Die in Fig. 2 dargestellte zweite bevorzugte Ausführungsform eines erfindungsgemäßen Silobehälters 200 umfasst einen Behälterkörper 10 mit einem nicht näher dargestellten Innenraum. Auf dem Behälter 10 sind mehrere Domdeckel 12 zum wahlweise Verschließen des Innenraumes vorgesehen. Der zusätzliche Luftzirkulationskreislauf ist ansaugseitig derart offen ausgebildet, dass der Luftzirkulationskreislauf die angesaugte Luft der Umgebung entnimmt, entwässert und dem Innenraum des Silobehälters 200 zuführt. Hierzu ist in Luftförderrichtung ausgehend von der Ansaugseite für Umgebungsluft folgendes vorgesehen: eine offene Ansaugleitung 52, eine Lufttrockner-/Luftkühlereinheit 54 mit einer automatischen Entwässerung 56 sowie eine Luftzuführleitung 58 zum Innenraum des Silobehälters 200. In der Luftzuführleitung 58 ist ein Absperrventil 60 angeordnet. Am Silobehälter 200 ist ferner eine offene Abluftleitung 62 mit Absperrventil 64 vorgesehen. Die Lufttrockneranlage ist als aus den Bestandteilen 52 bis 58 bestehende Kompaktanlage 42 ausgebildet.

Durch den Lufttrockner 54 wird aus der Außenluft durch die offene Ansaugleitung 52 Luft angesaugt. Der Trockner 54 trocknet die angesaugte Luft und scheidet die Feuchtigkeit aus dem Entwässerungsanschluss 56 aus. Die getrocknete Luft wird über einen Anschlussstutzen 66 bzw. über die Oberluft in den Silobehälter 200 eingeblasen und durchströmt diesen. Nach dem Durchströmen des Silobehälters wird die nun wieder feuchte Luft über einen zweiten Stutzen 68 aus dem Silobehälter 200 abgeführt. Bei dem Betrieb des Silobehälters wird die Zu- bzw. Abluftleitung 58, 62 mittels der Absperrventile 60 und 64 abgesperrt.

### BEZUGSZEICHENLISTE

- 100: Silobehälters
- 10: Behälterkörper
- 12: Dorndeckel
- 14: Schlauchleitungsanschluss
- 16: Ansaugleitung
- 18: Luftfilter
- 19: erstes Magnetventil
- 20: Anlagenkompressor
- 21: Verbindungsleitung
- 22: zweites Magnetventil
- 23: Druckschalter für den Anlagenkompressor 20
- 24: Luftbehälter
- 26: Ablassleitung
- 28: Lufttrockner-/Luftkühlereinheit
- 30: automatische Entwässerung
- 32: Druckminderer
- 34: Rückschlagventil
- 36: drittes Magnetventil
- 38: Luftrückführleitung
- 40: Oberluftanschluss
- 42: Kompakteinheit
- 52: offene Ansaugleitung
- 54: Lufttrockner-/Luftkühlereinheit
- 56: automatische Entwässerung
- 58: Luftzuführleitung
- 60: Absperrventil Luftrückführleitung
- 62: Abluftleitung
- 64: Absperrventil Abluftleitung
- 66: Anschlussstutzen
- 68: zweiter Stutzen

## Patentansprüche

1. Silobehälter (100, 200) mit einem Innenraum für schüttfähige, insbesondere pulverförmige, Güter,
**dadurch gekennzeichnet, dass**
am Silobehälter (100, 200) ein zusätzlicher, Luftzirkulationskreislauf vorgesehen ist, welcher Luft ansaugt, entwässert und die entwässerte Luft dem Silobehälter (100, 200) zuführt.

2. Silobehälter (100) nach Anspruch 1,
**dadurch gekennzeichnet, dass**
der Luftzirkulationskreislauf abgeschlossenen ausgebildet ist, wobei der Luftzirkulationskreislauf die angesaugte Luft dem Innenraum entnimmt.

3. Silobehälter (100) nach Anspruch 1 oder 2,
**dadurch gekennzeichnet, dass**
der Luftzirkulationskreislauf in Luftförderrichtung ausgehend von dem Innenraum folgendes aufweist: eine Ansaugleitung (16), einen Anlagenkompressor (20), eine Lufttrockner-/Luftkühlereinheit (28) mit einer automatischen Entwässerung (30) sowie eine Luftrückführleitung (38) zum Innenraum des Silobehälters (100).

4. Silobehälter (100) nach Anspruch 3,
**dadurch gekennzeichnet, dass**
die Luftrückführleitung (38) an einen Oberluftanschluss (40) oder an einen speziellen Anschluß des Silobehälters (100) angeschlossen ist.

5. Silobehälter (100) nach Anspruch 3 oder 4,
**dadurch gekennzeichnet, dass**
die Luftrückführleitung (38) zusätzlich einen Druckminderer (32) mit Rückschlagventil (34) aufweist.

6. Silobehälter (100) nach Anspruch 5,
**dadurch gekennzeichnet, dass**
in Luftförderrichtung nach dem Druckminderer (32) mit Rückschlagventil (34) ein drittes Magnetventil (36) angeordnet ist.

7. Silobehälter (100) nach einem der Ansprüche 3 bis 6,
**dadurch gekennzeichnet, dass**
in Luftförderrichtung vor dem Anlagenkompressor (20) ein erstes Magnetventil (19) angeordnet ist.

8. Silobehälter (100) nach einem der Ansprüche 3 bis 7,
**dadurch gekennzeichnet, dass**
in Luftförderrichtung nach dem Anlagenkompressor (20) ein zweites Magnetventil (24) angeordnet ist.

9. Silobehälter 8100) nach einem der Ansprüche 3 bis 8,
**dadurch gekennzeichnet, dass**
in der Ansaugleitung (16) ein Ansaugfilter (18) vorgesehen ist.

10. Silobehälter (100) nach einem der Ansprüche 3 bis 9,
**dadurch gekennzeichnet, dass**
der Anlagenkompressor (20) einen Luftbehälter (22) aufweist.

11. Silobehälter (100) nach einem der Ansprüche 3 bis 10,
**dadurch gekennzeichnet, dass**
der Anlagenkompressor (20) derart ausgebildet ist, dass er an einer 24V Stromversorgung betreibbar ist.

12. Silobehälter (200) nach Anspruch 1,
**dadurch gekennzeichnet, dass**
der Luftzirkulationskreislauf ansaugseitig derart offen ausgebildet ist, dass der Luftzirkulationskreislauf die angesaugte Luft der Umgebung entnimmt.

13. Silobehälter (200) nach Anspruch 12,
**dadurch gekennzeichnet, dass**
der Luftzirkulationskreislauf in Luftförderrichtung ausgehend von der Ansaugseite für Umgebungsluft folgendes aufweist: eine offene Ansaugleitung (52), eine Lufttrockner-/Luftkühlereinheit (54) mit einer automatischen Entwässerung (56) sowie eine Luftzuführleitung (58) zum Innenraum des Silobehälters (200).

14. Silobehälter (200) nach Anspruch 12,
**dadurch gekennzeichnet, dass**
in der Luftrückführleitung (58) ein Absperrventil (60) angeordnet ist.

15. Silobehälter (200) nach einem der Ansprüche 12 bis 14,
**dadurch gekennzeichnet, dass**
am Silobehälter eine offene Abluftleitung (62) vorgesehen ist.

16. Silobehälter (200) nach Anspruch 15,
**dadurch gekennzeichnet, dass**
in der offenen Abluftleitung (62) ein Absperrventil (64) angeordnet ist.

17. Silobehälter (100, 200) nach einem der vorhergehenden Ansprüche,
**dadurch gekennzeichnet, dass**
wenigstens ein Domdeckel (12) oder ein spezieller Anschluß mit einem zusätzlichen Schlauchleitungsanschluss (14) zur Entnahme von Luft aus dem Innenraum vorgesehen ist.

18. Silobehälter (100, 200) nach einem der vorhergehenden Ansprüche,
**dadurch gekennzeichnet, dass**
der Silobehälter (100) auf einem Fahrzeug, insbesondere einem Sattelanhänger, angeordnet ist.

## Claims

1. Silo structure (100, 200) with an internal compartment for bulk material, in particular powdery material,
**characterised in that**
an additional air circulation circuit is provided at the silo structure (100, 200) which sucks in air, de-waters the same and feeds the de-watered air into the silo structure (100, 200).

2. Silo structure (100) according to Claim 1,
**characterised in that**
the air circulation circuit is a closed circuit and that the air circulation circuit takes the sucked-in air from the internal compartment.

3. Silo structure (100) according to Claim 1 or 2,
**characterised in that**
the air circulation circuit is provided with the following in the air circulation direction, proceeding from the internal compartment: a suction pipe (16), a plant compressor (20), an air-drying/air-cooling unit(28) with an automatic de-watering (30) and an air feedback pipe (38) to the internal compartment of the silo structure (100).

4. Silo structure (100) according to Claim 3,
**characterised in that**
the air feedback pipe (38) is connected to an upper air connection (40) or to a special connection of the silo structure (100).

5. Silo structure (100) according to Claim 3 or 4,
**characterised in that**
the air feedback pipe (38) is provided in addition with a pressure reducer (32) with a check valve (34).

6. Silo structure (100) according to Claim 5,
**characterised in that**
a third solenoid valve (36) is arranged in the air circulation direction after pressure reducer (32) with check valve (34).

7. Silo structure (100) according to any of the Claims 3 to 6,
**characterised in that**
a first solenoid valve (19) is arranged in the air circulation direction before plant compressor (20).

8. Silo structure (100) according to any of the Claims 3 to 7,
**characterised in that**
a second solenoid valve (24) is arranged in the air circulation direction after plant compressor (20).

9. Silo structure (100) according to any of the Claims 3 to 8,
**characterised in that**
a suction filter (18) is provided in the suction pipe (16).

10. Silo structure (100) according any of the Claims 3 to 9,
**characterised in that**
plant compressor (20) is provided with an air container (22).

11. Silo structure (100) according to any of the Claims 3 to 10,
**characterised in that**
plant compressor (20) is designed so that it can be operated by means of a 24 V power supply.

12. Silo structure (200) according to Claim 1,
**characterised in that**
the air circulation circuit is open on the suction side in such a manner that the air circulation circuit
takes the sucked-in air from the surrounding environment.

13. Silo structure (200) according to Claim 12,
**characterised in that**
the air circulation circuit is provided with the following in the air circulation direction, proceeding from the suction side for ambient air: an open suction pipe (52), an air-drying/air-cooling unit (54) with an automatic de-watering (56) and an air supply pipe (58) to the internal compartment of the silo structure (200).

14. Silo structure (200) according to Claim 12,
**characterised in that**
a stop valve (60) is arranged in the air feedback pipe (58).

15. Silo structure (200) according to any of the Claims 12 to 14,
**characterised in that**
an open air evacuation duct (62) is provided on the silo structure.

16. Silo structure (200) according to Claim 15,
**characterised in that**
a stop valve (64) is arranged in the open air evacuation duct (62).

17. Silo structure (100, 200) according to any of the preceding Claims,
**characterised in that**
at least one dome cover (12) or a special connection with an additional hose pipe connection (14) is provided for evacuating air from the internal compartment.

18. Silo structure (100, 200) according to any of the preceding Claims,
**characterised in that**
the silo structure (100) is mounted on a vehicle, in particular on a semitrailer.

## Revendications

1. Silo (100, 200) avec un compartiment intérieur pour des marchandises en vrac, notamment sous forme de poudre,
**caractérisé en ce qu'**
un circuit de circulation d'air supplémentaire est prévu sur le silo (100, 200), aspirant, déshydratant l'air, et amenant l'air déshydraté au silo (100, 200).

2. Silo (100) selon la revendication 1,
**caractérisé en ce que**
le circuit de circulation d'air est de forme fermée, ledit circuit de circulation d'air prélevant l'air d'aspiration dans le compartiment intérieur.

3. Silo (100) selon la revendication 1 ou 2,
**caractérisé en ce que**
le circuit de circulation d'air présente, dans le sens de refoulement d'air depuis le compartiment intérieur: une conduite d'aspiration (16), un compresseur d'installation (20), une unité de séchage/de refroidissement d'air (28) avec une déshydratation automatique (30), et une conduite de retour d'air (38) vers le compartiment intérieur du silo (100).

4. Silo (100) selon la revendication 3,
**caractérisé en ce que**
la conduite de retour d'air (38) est reliée à un raccord d'air supérieur (40) ou à un raccord spécial du silo (100).

5. Silo (100) selon la revendication 3 ou 4,
**caractérisé en ce que**
la conduite de retour d'air (38) comporte en outre un réducteur de pression (32) avec une soupape de non-retour (34).

6. Silo (100) selon la revendication 5,
**caractérisé en ce qu'**
une troisième électrovalve (36) est disposée en aval du réducteur de pression (32) avec une soupape de non-retour (34) dans le sens de refoulement d'air.

7. Silo (100) selon l'une des revendications 3 à 6,
**caractérisé en ce qu'**
une première électrovalve (19) est disposée est disposée en amont du compresseur d'installation (20) dans le sens de refoulement d'air.

8. Silo (100) selon l'une des revendications 3 à 7,
**caractérisé en ce qu'**
une deuxième électrovalve (24) est disposée est disposée en aval du compresseur d'installation (20) dans le sens de refoulement d'air.

9. Silo (100) selon l'une des revendications 3 à 8,
**caractérisé en ce qu'**
un filtre d'aspiration (18) est prévu dans la conduite d'aspiration (16).

10. Silo (100) selon l'une des revendications 3 à 9,
**caractérisé en ce que**
le compresseur d'installation (20) comporte un réservoir d'air (22).

11. Silo (100) selon l'une des revendications 3 à 10,
**caractérisé en ce que**
le compresseur d'installation (20) est formé de manière à pouvoir être actionné sur une alimentation en courant de 24 V.

12. Silo (200) selon la revendication 1,
**caractérisé en ce que**
le circuit de circulation d'air est ouvert côté aspiration, de sorte que le circuit de circulation d'air prélève l'air aspiré dans l'environnement.

13. Silo (200) selon la revendication 12,
**caractérisé en ce que**
le circuit de circulation d'air présente, dans le sens de refoulement d'air depuis le coté d'aspiration pour l'air ambiant : une conduite d'aspiration ouverte (52), une unité de séchage/de refroidissement d'air (54) avec une déshydratation automatique (56), et une conduite d'amenée d'air (58) vers le compartiment intérieur du silo (200).

14. Silo (200) selon la revendication 12,
**caractérisé en ce qu'**
une soupape de fermeture (60) est disposée dans la conduite d'amenée d'air (58).

15. Silo (200) selon l'une des revendications 12 à 14,
**caractérisé en ce qu'**
une conduite d'échappement d'air ouverte (62) est prévue sur le silo.

16. Silo (200) selon la revendication 15,
**caractérisé en ce qu'**
une soupape de fermeture (64) est disposée dans la conduite d'échappement d'air ouverte (62).

17. Silo (100, 200) selon l'une des revendications précédentes,
**caractérisé en ce qu'**
au moins un couvercle de dôme (12) ou un raccord spécial avec un raccord de flexible (14) supplémentaire sont prévus pour le prélèvement de l'air dans le compartiment intérieur.

18. Silo (100, 200) selon l'une des revendications précédentes,
**caractérisé en ce que**
le silo (100) est disposé sur un véhicule automobile, notamment une semi-remorque.
